# EUROPEAN PATENT APPLICATION

(11) **EP 2 567 624 A1**
(43) Date of publication of application: **13.03.2013**
(21) Application number: 11777301.0
(22) Date of filing: 14.04.2011
(51) Int. Cl.: A23L 1/0532

(54) **METHOD FOR THE ENCAPSULATION OF A FOOD PRODUCT, AND FOOD PRODUCT**

(30) Priority: 04.05.2010 ES 201030662
(71) Applicant: Oriol Castro Projectes, S.L., 08870 Sitges (Barcelona) (ES)
(72) Inventor: CASTRO FORNS, José Oriol, E-08870 Sitges (Barcelona) (ES)
(74) Representative: Durán-Corretjer, S.L.P.
(86) International application number: PCT/ES2011/000122
(87) International publication number: WO 2011/138478

(57) **Abstract**

The invention relates to a method for the encapsulation of a food product and to a food product. Specifically, the invention relates to a method for encapsulating a liquid food essentially devoid of calcium ions, comprising the following steps: addition of a product containing calcium ions to a liquid food sample to be encapsulated; immersion of a quantity of the liquid food with calcium ions in a solution containing a non-calcium alginate, forming a capsule of calcium alginate around the liquid; and extraction of said capsule from the solution. The invention is characterised in that the capsule is subsequently submerged in a container containing the aforementioned liquid food.

## Description

The present invention relates to a food product and a method for obtaining it, which have substantial features of novelty and inventive step.

More particularly, the food product to which the invention relates is a product obtained by a method which comprises a process usually known as "spherification".

Document US 2403547 discloses a first spherification technique for producing artificial cherries, in which drops of fruit juice mixed with alginates are allowed to fall into a bath of calcium chloride, obtaining some completely solid spheres which substantially contain juice, alginate and calcium ions, together with residues of chloride ions.

This technique is known as basic or direct spherification. However, although document US 2403547 dates from 1946, the technique passed almost unnoticed until the decade of the 1990's when Ferrán Adrià and his team successfully adapted the technique for use in haute cuisine, initially by the presentation of a so called 'apple caviar'.

However, basic spherification has the following disadvantages. Firstly, the calcium ions trapped by the alginate in the gelification process significantly change the taste of the liquid food to be spherified, said taste being unpleasant. Secondly, the calcium ions are rapidly diffused towards the interior of the spherified body (or gelified body, if the process produces a body other than a sphere). It is therefore not possible to obtain spheres or bodies which contain a liquid inside and are stable over time.

To solve the problem of the taste of the calcium chloride, the doses can be significantly adjusted, but this is an expensive and difficult process. Therefore, the use of calcium gluconolactate (a mixture of calcium gluconate and calcium lactate) or calcium lactate is also known.

To solve the problem of obtaining a stable sphere or body with liquid inside, a process was developed known to its inventors as "reverse spherification".

With reverse spherification, the liquid food to be gelified or spherified is mixed with a substance containing calcium ions (for example, calcium chloride, or preferably calcium gluconolactate or calcium lactate which have less effect on the taste). A drop of another type of liquid thus obtained is introduced into a solution containing a non-calcium alginate (for example sodium alginate). The sodium alginate solution may also contain the liquid food or a different liquid food.

As with conventional spherification, contact between the alginates and the calcium causes a film to form outside while remaining liquid inside. This time, however, because there are calcium ions in the inner solution, the diffusion of calcium ions which gelifies the entire body or sphere does not occur, nor are the alginate molecules diffused inwards, due to its size. In this case, there is a migration of calcium outwards, which means that the period during which it remains in the outer solution causes the thickness of the gel wall which is formed to increase.

In this situation, the inner solution with calcium ions and the outer solution with alginate may both have the same liquid food or different liquids food as an ingredient.

Therefore the reverse spherification, according to the known technique, makes it possible for spheres or bodies to be prepared with a semisolid, gelatinous exterior and a stable, liquid interior, and for the influence of calcium on the organoleptic properties of the end product to be reduced and also makes possible a contrast between the taste of the outer coating and the inner liquid.

However, the reverse spherification technique has some disadvantages. An important disadvantage is associated with the density and viscosity of the outer alginate solution. Due to the high density and viscosity of these solutions, it is difficult or impossible to produce small balls ('caviar') and in most cases a thickener (usually xanthene gum or other thickeners) must be added to the solution of liquid food with calcium ions to prevent the solution rich in calcium ions from floating on the surface without penetrating the alginate solution.

Document JP58205463A discloses a spherification process which uses a calcium alginate and produces a total "emptying" of the liquid from inside the sphere. This process requires the specific gravity of the liquid food to be adjusted to 1.05 by adding saccharides, which inevitably leads to a loss of organoleptic properties. The contact time between sphere and the liquid food is not stated which seems to suggest that liquid and spheres are mixed at the time of consumption.

Document JP58205492A discloses a similar process. Moreover, in this document, no calcium ions are added to the liquid food (sake).

Document JP58220674A discloses a spherification process which uses sodium alginate and no calcium ions are added to the liquid food (in this case, coffee, for example). The document states that the components of the mixture added to the sodium alginate solution are a solution of calcium chloride, xanthene gum and glucose. Once formed, these 'clean' spheres are added to a coffee extract in such a way that a hollow particle is obtained (unlike in the invention) which tastes like the extract and is subsequently added to a conventional drink and served. Therefore the addition clearly occurs just before the drink is served. Consequently, the liquid inside the sphere or capsule body usually consists of a liquid food, residual calcium ions, a thickener, residual chloride and/or gluconates and/or lactates. Moreover, the solution has usually passed through homogenisation and a thermal (cooling) process. Consequently, although the properties of the liquid inside the sphere or encapsulated body may be very similar to those of the original liquid food, they are not the same, and this may be an important factor depending on the liquid food concerned, which may be wine and/or a carbonated drink, for example.

The object of the present invention is to disclose a solution to the above-mentioned disadvantages.

Accordingly, the present invention has a stage in which at least a sphere or encapsulated body of a liquid food is produced by means of the reverse spherification technique and a subsequent stage in which said sphere or encapsulated body is immersed in said liquid food.

The inventor found that during the time the sphere or encapsulated body remains in the liquid food contained inside the sphere or encapsulated body, an exchange through the alginate wall occurs of the spurious components introduced in the liquid inside the encapsulated body to produce the spherification reaction. Even more surprisingly, in the case of carbonated drinks, such as champagne, the inventor found that the gas bubbles penetrate inside the encapsulated body and remain there, and the consumer therefore detects the bubbles inside the encapsulated body when consuming the food, which produces a great sensory experience. Because the taste problem of the known spherification techniques has less impact as a result of being diluted in the greater volume of liquid in which the spherified body or bodies are immersed, this may be used later. In particular, any kind of wine may be served with 'grapes' of wine inside.

In particular, the present invention consists of an encapsulation method for a liquid food substantially lacking calcium ions, comprising the stages of:
- adding a product which contains calcium ions to a sample of liquid food to be encapsulated;
- immersing a quantity of the liquid food comprising calcium ions in a solution containing a non-calcium alginate, forming a capsule of calcium alginate around the liquid;
- removing the capsule obtained from the solution
characterised in that the capsule obtained is then immersed in a container of said liquid food, preferably leaving it to rest for at least 12 hours, more preferably 24 hours. Still more preferably, the capsule obtained may be enclosed in a container of said liquid food.

Other preferred embodiments of the method according to the present invention are particular embodiments of the reverse spherification process which are especially preferable for application to the method according to the present invention. For example, preferably a thickener is added to the liquid food to be encapsulated, still more preferably xanthene gum. The substances carrying calcium ions are preferably calcium chloride, calcium lactate, calcium gluconate or a mixture thereof. More preferably, the substance will be calcium gluconolactate.

Using the method according to the present invention a novel product is obtained which consists of a liquid food containing capsules which have a solid gelatinous wall of calcium alginate and an interior filled with said liquid food. In a preferred embodiment, the liquid food is carbonated. In another preferred embodiment, said liquid is wine. Still more preferably, said product is sparkling wine. In this description, the term 'sparkling wine' should be understood from a technical point of view. Thus, the term includes all those wine derivates which undergo a carbonation process, regardless of the details of the process by which they are obtained and their original name, such as sparkling wine, champagne, cava, etc.

Still more preferably, the product may be commercialised in the package in which it is contained. Said package, still more preferably, is a bottle.

For a better understanding of the invention, the accompanying drawings are provided as an explanatory but not limiting embodiment of the present invention.
Fig. 1 is a view in front elevation of an example of the product according to the present invention.
Fig. 2 is a detail of Fig 1.

### Embodiment example of the invention

1500g of low mineralisation mineral water were taken and 7.5g of sodium alginate were added thereto. This was mixed with a whisk until all the lumps had disappeared and it was left to rest for its deaeration.

100g of cava were mixed with 2g of calcium gluconolactate. This was mixed with a whisk and 0.3g of xanthene gum were added, mixed well and left to rest and deaerate. A liquid food was obtained containing cava, but in the process of adding the product carrying calcium ions (gluconolactate) and the thickener, it lost some of its organoleptic properties, particularly its bubbles.

A syringe was filled with the cava liquid obtained and a small quantity was injected into the alginate solution obtained previously so that a sphere formed which was left for one minute in the alginate solution, after which it was removed from the solution (the reaction forming a wall of calcium alginate outside the cava liquid continues as long as the sphere is kept in the alginate solution). The process was repeated several times until a cluster of spheres was obtained. Once removed from the alginate solution, the spheres were drained, rinsed with water at room temperature to remove the excess alginate and kept at a controlled temperature of approximately 4-10 °C (domestic refrigerator).

It was noted that the colour and taste of the spheres obtained were very similar to those of cava. However, the liquid inside still retained remnants of the added elements, and there were no bubbles.

Twelve capsules were immersed in a 0.7 litre bottle of the same cava used to produce the spheres, and the bottle was closed and left to rest for 12 and 24 hours. The spheres were slightly denser than the cava. In both cases, the taste of the spheres was found to be even more similar to that of the original cava. At the same time it was found, surprisingly, that the spheres had bubbles inside. It was also found that in these circumstances consuming the cava from the bottle with spheres inside was organoleptically surprising and enjoyable, as the spheres blend perfectly with the cava. Because of the difference in volume between the spheres and the bottle, the cava in the bottle did not suffer significant organoleptic changes as a result of the diffusion of spherification byproducts.

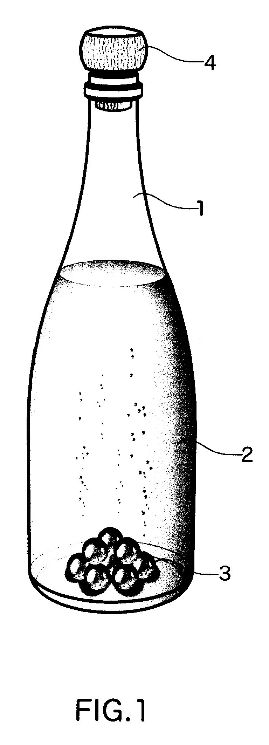

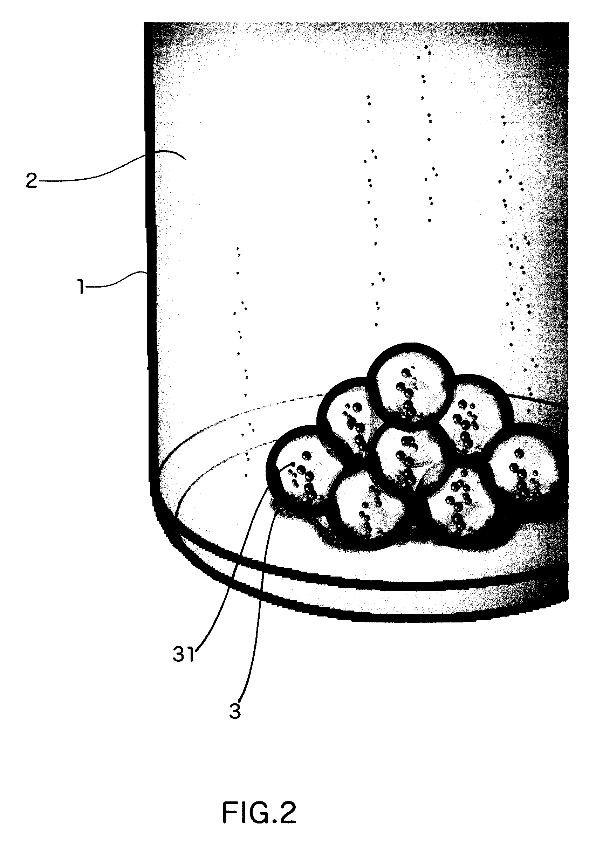

As seen in Figs. 1 and 2, the product obtained is a cava 2 containing encapsulated bodies (spheres 3). The cava 2 is packed in a bottle 1 with a cork stopper 4 and can be commercialised in this form. As seen in the detail of Fig. 2, the spheres 3 contain bubbles 31 typical of cava.

Of course variations of the embodiment shown are possible. In the example, the spheres obtained were introduced into a bottle to produce an exchange between the inside of the sphere and the cava outside. However, this exchange could occur outside the bottle. Independently of the above, the spheres may be added when the finishing liquor is added to the bottle.

Other ways of producing the spheres physically are possible. For example, by using a teaspoon with holes or allowing drops of a suitable diameter to fall from a pipette. The encapsulated body may also be other than spherical.

The liquid food used may be of any type, in particular juices or any kind of wine. The invention has an additional advantage if the liquid is carbonated, as the bubbles that were lost from the liquid food in the process of creating the encapsulated body are restored.

In the specification, the phrase "substantially lacking calcium ions" refers to a concentration of calcium ions that is low enough not to cause a visible increase in the wall of the bodies obtained during immersion of the encapsulated bodies obtained.

Although the invention has been described with reference to preferred embodiments, these should not be considered as limiting the invention, which is defined by the widest interpretation of the following claims.

## Claims

1. Method for the encapsulation of a liquid food substantially lacking calcium ions, comprising the stages of:
- adding a product containing calcium ions to a sample of the liquid food to be encapsulated;
- immersing a quantity of the liquid food comprising calcium ions in a solution containing a non-calcium alginate, forming capsules of calcium alginate around the liquid;
- removing the capsules obtained from the solution;
**characterised in that** the capsules obtained are then immersed in a container which contains said liquid food, the liquid and the capsules contained in said liquid being then packed in a closed container.

2. Method according to claim 1, **characterised in that** the capsules are left to rest in the liquid food for at least 12 hours.

3. Method according to claim 2, **characterised in that** the capsules are left to rest in the liquid food for at least 24 hours.

4. Method according to any one of claims 1 to 3, **characterised in that** said container is a bottle.

5. Method according to any one of claims 1 to 4, **characterised in that** it comprises a stage of adding a thickener to the sample of liquid to be encapsulated.

6. Method according to any one of claims 1 to 5, **characterised in that** the product carrying calcium ions comprises calcium chloride, calcium gluconate or calcium lactate.

7. Method according to any one of claims 1 to 6, **characterised in that** the product carrying calcium ions comprises calcium gluconolactate.

8. Method according to any one of claims 1 to 7, **characterised in that** said liquid food is a carbonated liquid.

9. Method according to any one of claims 1 to 8, **characterised in that** said liquid food is sparkling wine.

10. Method according to any one of claims 1 to 7, **characterised in that** said liquid food is wine.

11. Food product which consists of a closed container containing a liquid food which contains capsules which have a solid gelatinous wall of calcium alginate and are filled with said liquid food.

12. Product according to claim 11, **characterised in that** said liquid food is wine.

13. Product according to claim 12, **characterised in that** said liquid food is sparkling wine.

14. Product according to claim 11, **characterised in that** said liquid food is a carbonated liquid.

15. Product according to anyone of claims 11 to 14, **characterised in that** said container is a bottle.
